# EUROPEAN PATENT APPLICATION

(11) **EP 4 245 524 A1**
(43) Date of publication of application: **20.09.2023**
(21) Application number: 21891717.7
(22) Date of filing: 02.11.2021
(51) Int. Cl.: B32B 17/10, B23K 26/364, B23K 26/38, B32B 38/18

(54) **MULTILAYER STRUCTURE AND METHOD FOR PRODUCING SAME**

(30) Priority: 13.11.2020 JP 2020189245
(71) Applicant: Nitto Denko Corporation, Ibaraki-shi, Osaka 567-8680 (JP)
(72) Inventor: SATO, Keisuke, Ibaraki-shi, Osaka 567-8680 (JP); MURASHIGE, Takeshi, Ibaraki-shi, Osaka 567-8680 (JP); INAGAKI, Junichi, Ibaraki-shi, Osaka 567-8680 (JP)
(74) Representative: Hoffmann Eitle
(86) International application number: PCT/JP2021/040381
(87) International publication number: WO 2022/102470

(57) **Abstract**

The present multi-layered structure includes: a resin layer; and a glass layer stacked via an adhesive layer on the resin layer. A thickness of the glass layer is 10 µmor more and 300 um or less. A thickness of an outer peripheral portion of the resin layer is 5 um or more.

## Description

### [Technical Field]

The present invention relates to a multi-layered structure and a method for producing the multi-layered structure.

### [Background Art]

A multi-layered structure including two or more stacked layers is known. One exemplary multi-layered structure includes a glass layer having a thin plate thickness (glass film) and a silver reflective layer stacked thereon. The thickness of this multi-layered structure is, for example, within the range of from 1.0 through 200 um. This multi-layered structure is obtained, for example, from a glass roll formed through a down-draw process.

### [Prior art documents]

### [Patent documents]

[Patent Document 1] Japanese Patent Application Publication No. 2013-231744

### [Summary of the Invention]

### [Problem to be Solved by the Invention]

The above glass layer having a thin plate thickness is very brittle, and thus readily forms cracks. Also, in view of poor handling property thereof, proposed is, for example, a multi-layered structure that is improved in handling property through reinforcement by attaching a resin layer to one side of a glass layer.

However, the multi-layered structure formed by stacking the thin glass layer on the resin layer still involves the drawback of readily forming cracks in the glass layer.

The present invention has been accomplished in view of the above, aiming to provide a multi-layered structure that does not readily form cracks in a glass layer.

### [Means for Solving the Problem]

The present multi-layered structure includes: a resin layer; and a glass layer stacked via an adhesive layer on the resin layer. A thickness of the glass layer is 10 um or more and 300 um or less. A thickness of an outer peripheral portion of the resin layer is 5 um or more.

### [Advantageous Effects of the Invention]

According to a disclosed technique, it is possible to provide a multi-layered structure that does not readily form cracks in a glass layer.

### [Brief Description of Drawings]

[FIG. 1] FIG. 1 is a cross-sectional view illustrating a multi-layered structure according to a first embodiment.
[FIG. 2] FIG. 2 is a bottom view illustrating the multi-layered structure according to the first embodiment.
[FIG. 3] FIG. 3 is a partially enlarged cross-sectional view of an outer peripheral portion and its vicinity of the multi-layered structure according to the first embodiment.
[FIG. 4] FIG. 4 illustrates a production process of the multi-layered structure according to the first embodiment (part 1).
[FIG. 5] FIG. 5 illustrates a production process of the multi-layered structure according to the first embodiment (part 2).
[FIG. 6] FIG. 6 illustrates a production process of the multi-layered structure according to the first embodiment (part 3).
[FIG. 7] FIG. 7 illustrates a production process of the multi-layered structure according to the first embodiment (part 4).
[FIG. 8] FIG. 8 illustrates a production process of the multi-layered structure according to the first embodiment (part 5).
[FIG. 9] FIG. 9 illustrates a production process of the multi-layered structure according to the first embodiment (part 6).
[FIG. 10] FIG. 10 illustrates a production process of a multi-layered structure according to Comparative Examples.
[FIG. 11] FIG. 11 is a cross-sectional view illustrating a multi-layered structure according to Modified Example 1 of the first embodiment.
[FIG. 12] FIG. 12 is a table describing Examples and Comparative Examples.

### [Mode for Carrying Out the Invention]

Hereinafter, referring to the drawings, modes for carrying out the invention will be described. In the drawings, the same components are given the same symbols, and duplicate description thereof may be omitted.

### <First embodiment>

### [Multi-layered structure]

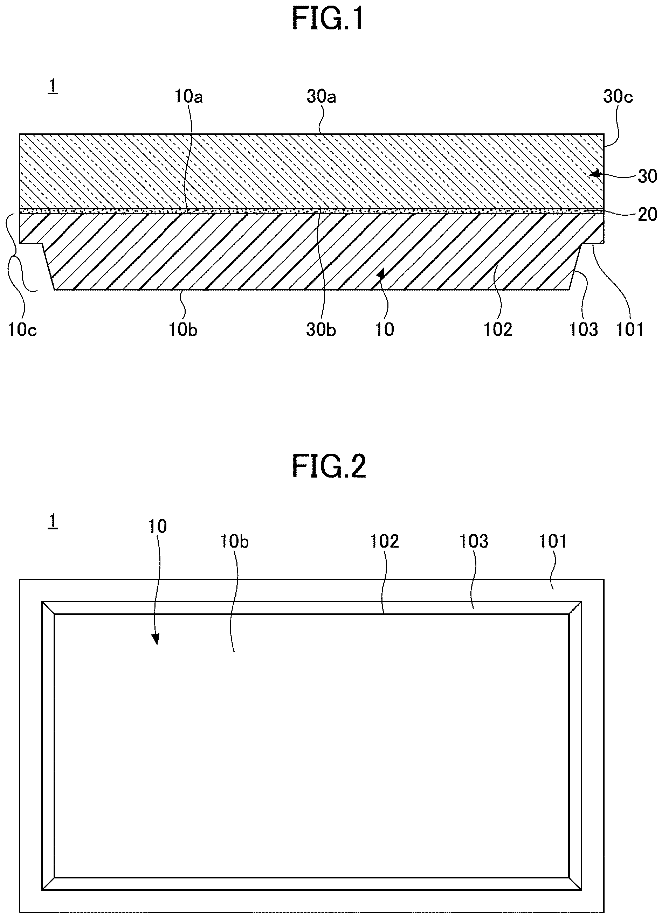

FIG. 1 is a cross-sectional view illustrating the multi-layered structure according to the first embodiment. FIG. 2 is a bottom view illustrating the multi-layered structure according to the first embodiment, with the multi-layered structure being viewed from the bottom face of the resin layer.

As illustrated in FIG. 1 and FIG. 2, the multi-layered structure 1 includes a resin layer 10, an adhesive layer 20, and a glass layer 30. The resin layer 10 has a top face 10a, a bottom face 10b, and a side face 10c. The glass layer 30 has a top face 30a, a bottom face 30b, and a side face 30c. In the multi-layered structure 1, the glass layer 30 is stacked via the adhesive layer 20 on the top face 10a of the resin layer 10. In other words, the adhesive layer 20 adheres the top face 10a of the resin layer 10 to the bottom face 30b of the glass layer 30.

A planar shape of the multi-layered structure 1 (a shape thereof as viewed from a normal direction of the top face 30a of the glass layer 30) is, for example, a rectangular shape. However, the planar shape thereof is not limited thereto. The planar shape of the multi-layered structure 1 can be circular, oval, a combination thereof, or another appropriate shape. Since the multi-layered structure 1 has flexibility, the multi-layered structure 1 can be readily adhered to a curved plane.

In the present embodiment, as one example, the planar shape of the multi-layered structure 1 is a rectangular shape. Specifically, in the present embodiment, as one example, the planar shape of the resin layer 10 is a rectangular shape, and the planar shape of the glass layer 30 is also a rectangular shape. A cross-sectional shape of the glass layer 30 is a rectangular shape.

The resin layer 10 includes an outer peripheral portion 101, an inner portion 102, and an oblique portion 103. The outer peripheral portion 101 is a portion facing the outer edge of the resin layer 10, and a width of the outer peripheral portion 101 is, for example, from about 20 um through about 150 um. A thickness of the outer peripheral portion 101 is 5 um or more. When the thickness of the outer peripheral portion 101 is 5 um or more, it is possible to prevent the glass layer 30 from receiving an impact of heat generated by laser light upon the processing of the resin layer 10 through irradiation of the laser light. As a result, when the glass layer 30 is cut with laser light, it is possible to suppress cracks from forming in the glass layer 30. Also, the thickness of the outer peripheral portion 101 is preferably 105 um or less. Thereby, separability of the resin layer 10 and the glass layer 30 with a laser is improved. A production process of the multi-layered structure 1 will be described below.

The inner portion 102 is provided on the center of the resin layer 10 side of the outer peripheral portion 101. The inner portion 102 is a thick portion that has the same thickness as that of the outer peripheral portion 101, or has a thickness more than that of the outer peripheral portion 101. When the outer peripheral portion 101 and the inner portion 102 have the same thickness, the thickness of the entirety of the resin layer 10 is an approximately constant thickness of 5 um or more.

When the inner portion 102 is thicker than the outer peripheral portion 101, the resin layer 10 may include the oblique portion 103 between the inner portion 102 and the outer peripheral portion 101, the oblique portion 103 gradually becoming thicker from the outer peripheral portion 101 toward the inner portion 102. The side face of the oblique portion 103 is an oblique face that forms an angle of more than 90 degrees with a bottom face 10b of the resin layer 10. As viewed from an opposite side of the resin layer 10 from the glass layer 30 (the bottom face 10b-facing side), the oblique portion 103 and the outer peripheral portion 101 are provided, for example, annularly around the inner portion 102.

In accordance with a production method of the multi-layered structure 1, however, the oblique portion 103 may be formed at only one side of the resin layer 10 in a bottom view, or the oblique portion 103 may be formed at two sides or three sides of the resin layer 10 in the bottom view. Also, the thickness of the outer peripheral portion 101 is 5 um or more, but is not necessarily a constant thickness. For example, in the bottom view, the thickness of the outer peripheral portion 101 may be 5 um at a portion facing one side of the resin layer 10, and the thickness of the outer peripheral portion 101 may be more than 5 um at portions facing the other three sides. Alternatively, in the bottom view, the thickness of the outer peripheral portion 101 may be 5 um at portions facing two sides or three sides of the resin layer 10, and the thickness of the outer peripheral portion 101 may be more than 5 um at portions facing the other two sides or one side.

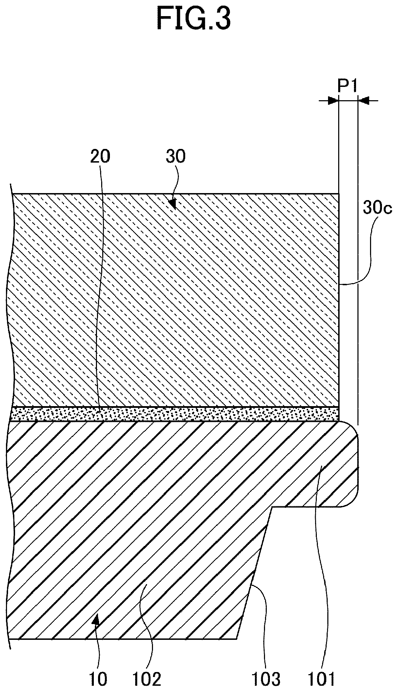

FIG. 3 is a partially enlarged cross-sectional view of an outer peripheral portion and its vicinity of the multi-layered structure according to the first embodiment. As illustrated in FIG. 3, in the multi-layered structure 1, the end portion of the outer peripheral portion 101 projects from the side face 30c of the glass layer 30 in a horizontal direction. An amount of projection P1 of the end portion of the outer peripheral portion 101 from the side face 30c of the glass layer 30 is preferably more than 0 um and 10 um or less. When the amount of projection P1 is 10 um or less, dimensional accuracy of a product can be maintained and no drawback in the outer appearance thereof arises. Note that, the amount of projection P1 may be 0 um. In other words, in a plan view, the outer edge of the outer peripheral portion 101 may match the outer edge of the glass layer 30.

Here, materials and the like of the portions of the multi-layered structure 1 will be described.

### [Resin layer, residual resin layer]

The resin layer 10 is a layer having flexibility that serves as a base material on which the glass layer 30 and other layers are to be stacked. The resin layer 10 is a single layer or includes a plurality of layers. When the resin layer 10 includes a plurality of layers, the plurality of layers are preferably stacked via a tacky layer having an adhesive function. From the viewpoint of flexibility thereof, the total thickness of the resin layer 10 may be 20 um or more and 1000 um or less, and is preferably in the range that is 25 um or more and 500 um or less, and more preferably 50 um or more and 200 um or less. When the resin layer 10 is a single layer, the thickness of the resin layer 10 may be, for example, in the range that is 30 um or more and 50 um or less.

Examples of a material of the resin layer 10 include: polyester-based resins such as polyethylene terephthalate-based resins and polyethylene naphthalate-based resins; cycloolefin-based resins such as norbornene-based resins; polyethersulfone-based resins; polycarbonate-based resins; acrylic resins; polyolefin-based resins; polyimide-based resins; polyamide-based resins; polyimideamide-based resins; polyarylate-based resins; polysulfone-based resins; polyetherimide-based resins; cellulose-based resins; and urethane-based resins.

### [Adhesive layer]

As the adhesive layer 20, a given appropriate adhesive is used. A thickness of the adhesive layer 20 is, for example, 0.5 um or more and 25 um or less. As the adhesive layer 20, for example, acrylic tacky agents, silicone-based tacky agents, rubber-based tacky agents, UV curable acrylic adhesives, UV curable epoxy-based adhesives, thermosetting epoxy-based adhesives, thermosetting melamine-based adhesives, thermosetting phenol-based adhesives, ethylene-vinyl acetate (EVA) intermediate membranes, polyvinyl butyral (PVB) intermediate membranes, and the like can be used.

Note that, in the present specification, the tacky agent refers to a layer that has adhesiveness at normal temperature and is to be adhered to an adherend with a low pressure. Therefore, even when the adherend attached to the tacky agent is removed, the tacky agent maintains a practically enough tacky force. Meanwhile, the adhesive refers to a layer that can bond materials by intervening between the materials. Therefore, when the adherend attached to the adhesive is removed, the adhesive no longer maintains a practically enough adhesive force.

### [Glass layer]

No particular limitation is imposed on the glass layer 30, and appropriate glass can be selected in accordance with the intended purpose. From the viewpoint of classification based on composition, examples of the glass layer 30 include soda lime glass, borate glass, aluminosilicate glass, and quartz glass. Alternatively, from the viewpoint of classification based on alkali components, examples thereof include alkali-free glass and low alkali glass. The content of an alkali metal component (e.g., Na₂O, K₂O, and Li₂O) in the above glass is preferably 15% by weight or less and further preferably 10% by weight or less.

Considering surface hardness, gas tightness, and corrosion resistance of the glass, a thickness of the glass layer 30 is preferably 10 um or more. Alternatively, since the glass layer 30 desirably has flexibility like a film, the thickness of the glass layer 30 is preferably 300 um or less. The thickness of the glass layer 30 is further preferably 30 um or more and 200 um or less and particularly preferably 50 µm or more and 100 um or less.

A light transmittance of the glass layer 30 at a wavelength of 550 nm is preferably 85% or higher. A refractive index of the glass layer 30 at a wavelength of 550 nm is preferably from 1.4 through 1.65. A density of the glass layer 30 is preferably from 2.3 g/cm³ through 3.0 g/cm³ and further preferably from 2.3 g/cm³ through 2.7 g/cm³.

No particular limitation is imposed on a forming method of the glass layer 30, and an appropriate method can be selected in accordance with the intended purpose. Typically, the glass layer 30 can be produced by fusing a mixture containing a main raw material (e.g., silica or alumina), a defoamer (e.g., sodium sulfate or antimony oxide), and a reducing agent (e.g., carbon) at a temperature of from about 1400°C through about 1600°C, followed by forming into a thin plate and then cooling. Examples of the forming method of the glass layer 30 include a slot down-draw process, a fusion process, and a float process. After a glass layer has been formed into a plate through one of these processes, the glass layer in the form of a plate may be made thinner. If necessary, the glass layer may be chemically polished with a solvent (e.g., hydrofluoric acid) in order to have an increased surface smoothness.

Note that, the surface of the glass layer 30 may be provided with a functional layer such as an antifouling layer, an antireflective layer, an electrically conductive layer, a reflection layer, or a decoration layer.

### [Method for producing the multi-layered structure]

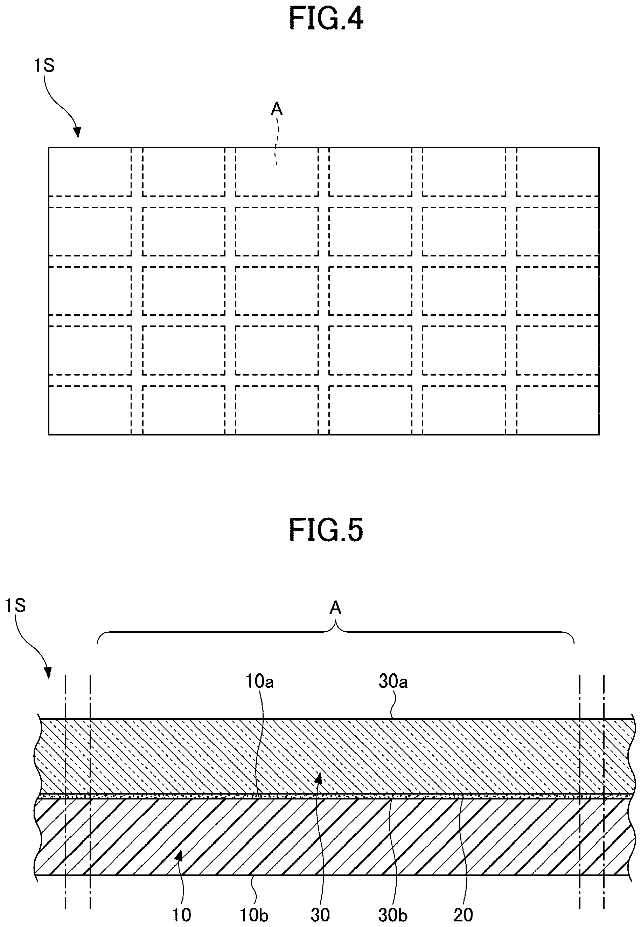

FIG. 4 to FIG. 9 illustrate a production process of the multi-layered structure according to the first embodiment. Referring to FIG. 4 to FIG. 9, the production process of the multi-layered structure will be described, focusing on a cutting step using a laser. First, as illustrated in FIG. 4 and FIG. 5, a multi-layered structure 1S in the form of a sheet is provided, the multi-layered structure 1S being obtained by stacking the resin layer 10 via the adhesive layer 20 on the glass layer 30. In the multi-layered structure 1S, the thickness of the glass layer 30 is from 10 um through 300 um. Also, the thickness of the resin layer 10 is 5 um or more.

For obtaining the multi-layered structure 1S, the resin layer 10 and the glass layer 30 are formed to have predetermined shapes through, for example, stamping, and then the resin layer 10 and the glass layer 30 are stacked via the adhesive layer 20. Alternatively, the resin layer 10 and the glass layer 30 may be continuously stacked via the adhesive layer 20 using a roll-to-roll process, followed by, for example, stamping, thereby forming separate sections having a given size. Also, the multi-layered structure 1S that has been already completed may be procured.

A plurality of product areas A that are to be the multi-layered structures 1 through separation into individual sections are defined in the multi-layered structure 1S. In the example as illustrated in FIG. 4, the product areas A are arranged vertically and horizontally at predetermined intervals, but this arrangement is not limiting. For example, the product areas A may be arranged one-dimensionally. Note that, FIG. 4 is a plan view, and FIG. 5 is a partially enlarged cross-sectional view illustrating the vicinity including one of the product areas A.

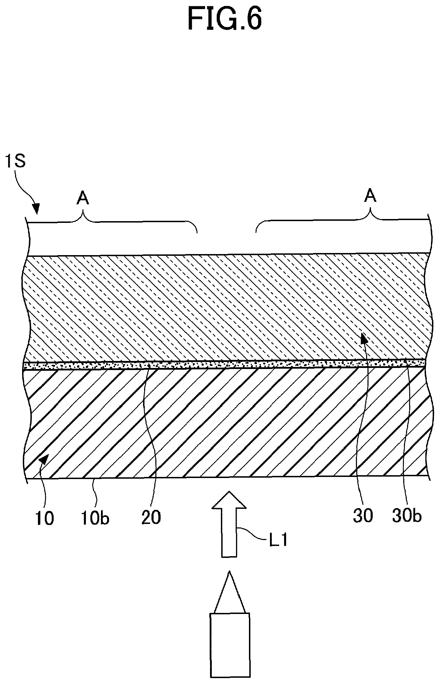

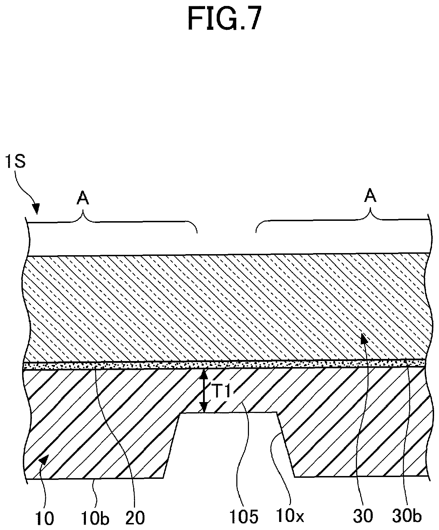

Next, as illustrated in FIG. 6, the outer peripheral portion of each of the product areas A in the multi-layered structure 1S is irradiated with laser light L1 from a position facing the bottom face 10b of the resin layer 10. For example, the outer peripheral portion of each of the product areas A as illustrated in FIG. 4 is sequentially irradiated with the laser light L1 in a lattice form. The irradiation conditions of the laser light L1 are set, for example, so as not to penetrate the resin layer 10 as illustrated in FIG. 7.

By the irradiation of the laser light L1, the resin layer 10 forms, for example, a groove 10x of a generally trapezoidal cross-sectional shape. The groove 10x is formed, in a lattice form, in the outer peripheral portion of each of the product areas A as illustrated in FIG. 4. The width of the widest portion of the through-hole 10x (the width of the resin layer 10 on the bottom face 10b side) is, for example, from about 40 um through about 300 um. Also, on the bottom face side of the groove 10x (the glass layer 30 side), a residual resin layer 105 is formed, in a lattice form, in the outer peripheral portion of each of the product areas A as illustrated in FIG. 4. The irradiation conditions of the laser light L1 are set so that a thickness T1 of the residual resin layer 105 becomes 5 um or more.

For the irradiation of the laser light L1, for example, a carbon dioxide laser can be used. Note that, although a femtosecond laser may be used for the irradiation of the laser light L1, when color fading of the resin layer 10 due to heat is disadvantageous, a carbon dioxide laser is preferably used because the carbon dioxide laser does not readily cause color fading of the resin layer 10.

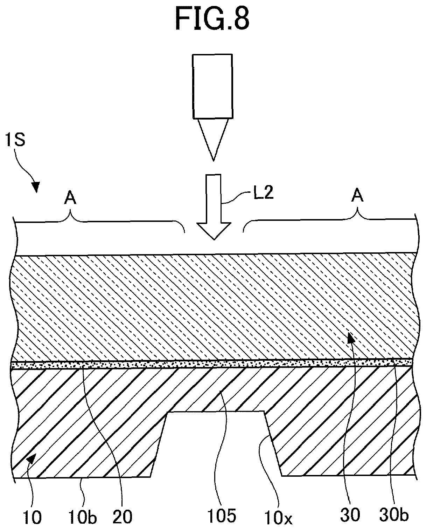

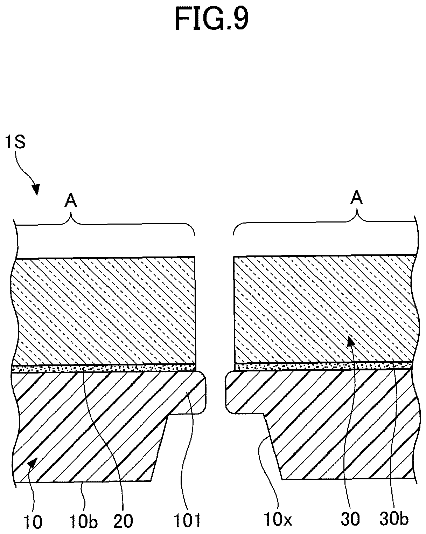

Note that, the steps as illustrated in FIG. 6 and FIG. 7 are optional. In other words, when the thickness of the resin layer 10 is 105 um or less, good separability is achieved, and thus, even if the groove 10x is not provided, the glass layer 30 and the resin layer 10 can be cut with the laser light L2 in the steps as illustrated in FIG. 8 and FIG. 9. When the thickness of the resin layer 10 is more than 105 um, the groove 10x is preferably formed so that the thickness T1 of the residual resin layer 105 becomes 5 um or more. Thereby, good separability of the resin layer 10 is achieved with the laser light L2 in the steps as illustrated in FIG. 8 and FIG. 9.

Next, as illustrated in FIG. 8, the outer peripheral portion of each of the product areas A of the multi-layered structure 1S is irradiated with laser light L2 from a position facing the top face 30a of the glass layer 30. For example, the laser light L2 is irradiated in dots at predetermined intervals along a lattice of the outer peripheral portion of each of the product areas A as illustrated in FIG. 4. As illustrated in FIG. 9, the laser light L2 is irradiated until the glass layer 30 and the residual resin layer 105 are cut and the product areas A are separated into individual sections. By cutting the glass layer 30 and the residual resin layer 105 through the irradiation of the laser light L2, the product areas A as illustrated in FIG. 4 are separated into individual sections to form a plurality of multi-layered structures 1. For the irradiation of the laser light L2, a femtosecond laser or a carbon dioxide laser can be used. Note that, a cut portion of the residual resin layer 105 is the outer peripheral portion 101 as illustrated in, for example, FIG. 1.

When a femtosecond laser is used, the diameter of one dot becomes from about 0.5 um through about 2 um, and the intervals between the dots next to each other becomes from about 0 um through about 2 um. In other words, the dots next to each other may overlap each other, with no interval therebetween. When a carbon dioxide laser is used, the diameters or intervals of the dots become ten times or more those obtained when a femtosecond laser is used. Considering processability of the glass layer 30, a femtosecond laser is preferably used in this step.

As illustrated in FIG. 9, when the residual resin layer 105 is cut by the irradiation of the laser light L2 to form the outer peripheral portion 101, the end portion of the outer peripheral portion 101 may be expanded due to heat generation caused by the irradiation of the laser light L2, and project from the side face 30c of the glass layer 30 in a horizontal direction. When a femtosecond laser is used, an amount of projection of the end portion of the outer peripheral portion 101 from the side face 30c of the glass layer 30 becomes about 3 um or more and less than about 5 um. When a carbon dioxide laser is used, an amount of projection of the end portion of the outer peripheral portion 101 from the side face 30c of the glass layer 30 becomes more than about 0 um and about 10 um or less.

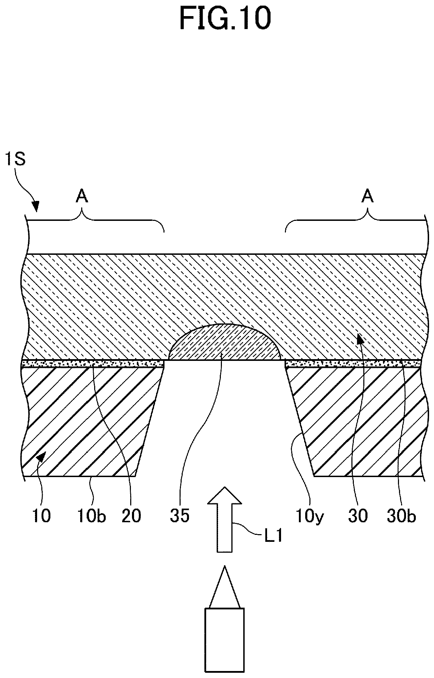

FIG. 10 illustrates a production process of a multi-layered structure according to Comparative Examples. The irradiation conditions are set so that the residual resin layer is not provided as illustrated in FIG. 10; i.e., the laser light L1 penetrates the resin layer 10 when the resin layer 10 is irradiated with the laser light L1 from a position facing the bottom face 10b of the resin layer 10.

In this case, the bottom face 30b side of the glass layer 30 receives an impact of heat generated by the irradiation of the laser light L1. Therefore, the fusion layer 35 having a predetermined thickness is formed in a thickness direction of the glass layer 30 from the bottom face 30b that is exposed to a through-hole 10y of the glass layer 30. For example, on the bottom face 30b side of the glass layer 30, the fusion layer 35 having a generally semi-circular cross-sectional shape is formed, in a lattice form, in the outer peripheral portion of each of the production areas A as illustrated in FIG. 4.

The fusion layer 35 is a layer that is formed by heat damage due to the irradiation of the laser light from the resin layer 10 side, and has residual stress. Therefore, by cutting a thick portion of the fusion layer 35, cracks are likely to form in the cut portion.

Meanwhile, as in the present embodiment, when the residual resin layer 105 is provided, the bottom face 30b side of the glass layer 30 does not readily receive an impact of heat generated by the irradiation of the laser light L1. Therefore, the fusion layer 35 is not formed in the bottom face 30b of the glass layer 30. In other words, the thickness of the residual resin layer 105 is set enough for the fusion layer 35 not to be formed. When the thickness of the residual resin layer 105 is 5 um or more, the fusion layer 35 is not formed.

In this way, in the present embodiment, the thickness of the outer peripheral portion 101 of the resin layer 10 is 5 µm or more. The outer peripheral portion 101 is formed through cutting with the laser light. Thus, by setting the thickness of the outer peripheral portion 101 to be 5 um or more, it is possible to prevent the glass layer 30 from receiving an impact of heat generated by the laser light upon the processing of the resin layer 10 by the irradiation of the laser light. As a result, it is possible to suppress cracks from forming in the glass layer 30 when the glass layer 30 is cut with the laser light.

Note that, when the glass layer 30 is processed using a femtosecond laser, a processed mark remains in a processed side face (cut face) of the glass layer 30. The processed mark is a linear groove extending in a laser irradiation direction; i.e., a longitudinal direction. The pitch of the grooves next to each other varies with conditions, but is about 1 um. Also, the cross section of the groove in a transversal direction is generally semi-circular. The height of the processed mark (depth of the groove) is about 0.1 um on average.

### <Modified Example 1 of the first embodiment>

Modified Example 1 of the first embodiment presents an example of the multi-layered structure in which the resin layer includes a plurality of layers. Note that, in Modified Example 1 of the first embodiment, description of the same components as those in the already described embodiment may be omitted.

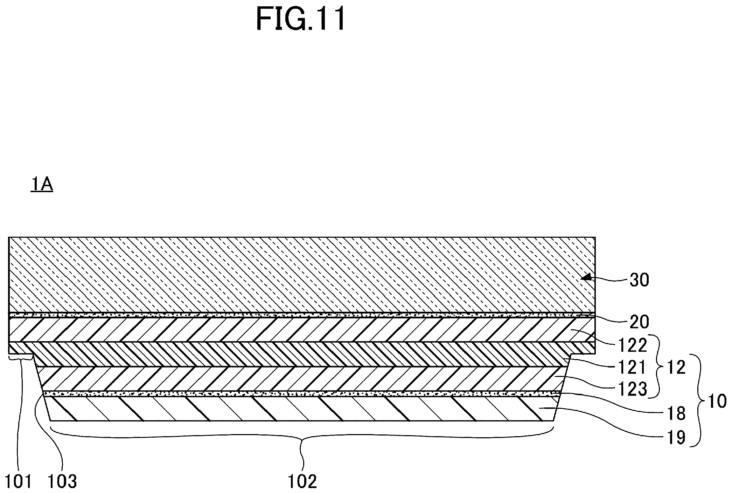

FIG. 11 is a cross-sectional view illustrating a multi-layered structure according to Modified Example 1 of the first embodiment. As illustrated in FIG. 11, the multi-layered structure 1A is different from the multi-layered structure 1 (see, for example, FIG. 1) in that the resin layer 10 includes a plurality of layers.

Similar to the first embodiment, the resin layer 10 includes the outer peripheral portion 101, the inner portion 102, and the oblique portion 103. The thickness of the outer peripheral portion 101 of the resin layer 10 is 5 um or more. Each of the outer peripheral portion 101, the inner portion 102, and the oblique portion 103 includes one or more layers, or may include two or more layers. For example, in FIG. 11, the outer peripheral portion 101 includes two layers, but may be one layer or include three or more layers.

The resin layer 10 includes a polarizing plate 12, a tacky agent layer 18, and a release film 19 in the order mentioned, from the adhesive layer 20 side. However, the resin layer 10 may further include other layers. For example, the resin layer 10 can include a phase difference layer between the polarizing plate 12 and the tacky agent layer 18. However, the other layers are not limited thereto.

An elastic modulus of the resin layer 10 is preferably from 0.1 GPa through 8.0 GPa, more preferably from 0.2 GPa through 7.0 GPa, and further preferably from 0.3 GPa through 5.0 GPa. In the present specification, the elastic modulus can be measured using an autograph under the following conditions.

### [Measurement method of elastic modulus]

Measurement temperature: 23°C
Sample size: 2 cm wide, 15 cm long
Inter-chuck distance: 10 cm
Tension speed: 10 mm/min

The polarizing plate 12 is disposed on the adhesive layer 20 side. The polarizing plate 12 includes a polarizer 121, a first protective film 122, and a second protective film 123. The first protective film 122 is disposed on the adhesive layer 20 side of the polarizer 121, and the second protective film 123 is disposed on the tacky agent layer 18 side of the polarizer 121.

The release film 19 is disposed via the tacky agent layer 18 on an opposite side of the second protective film 123 from the polarizer 121.

Hereinafter, the components of the resin layer 10 will be described in more detail.

### [Polarizing plate]

A thickness of the polarizing plate 12 is preferably from 5 um through 300 um, more preferably from 10 um through 250 um, further preferably from 25 um through 200 um, and particularly preferably from 25 um through 100 um.

The elastic modulus of the polarizing plate 12 is preferably 1 GPa or higher, more preferably from 1 GPa through 10 GPa, further preferably from 2 GPa through 7 GPa, and particularly preferably from 2 GPa through 5 GPa. Within such ranges, the multi-layered structure 1A having excellent puncture resistance can be obtained.

No particular limitation is imposed on a shape of the polarizing plate 12, and an appropriate shape can be selected in accordance with the intended purpose. One example thereof is a rectangular shape having long sides and short sides. When the polarizing plate 12 is a rectangular shape, an absorption axis direction of the polarizer 121 included in the polarizing plate 12 is preferably substantially parallel to the long sides or the short sides of the polarizing plate 12. Note that, in the present specification, "substantially parallel" is a concept that includes not only a case in which two lines are strictly parallel but also a case in which an angle formed between the two lines is ±10° (preferably ±5°).

### [Polarizer]

No particular limitation is imposed on the thickness of the polarizer 121, and an appropriate thickness can be selected in accordance with the intended purpose. The thickness of the polarizer 121 is typically from about 1 um through about 80 um. A thin polarizer may be used as the polarizer 121. In this case, the thickness of the polarizer 121 is preferably 20 µm or less, more preferably 15 um or less, further preferably 10 um or less, and particularly preferably 6 um or less.

The polarizer 121 preferably exhibits absorption dichroism at a given wavelength in a wavelength range of from 380 nm through 780 nm. A single transmittance of the polarizer is preferably 40.0% or higher, more preferably 41.0% or higher, further preferably 42.0% or higher, and particularly preferably 43.0% or higher. A degree of polarization of the polarizer 121 is preferably 99.8% or higher, more preferably 99.9% or higher, and further preferably 99.95% or higher.

The polarizer 121 is preferably an iodine-based polarizer. More specifically, the above polarizer can be formed of a polyvinyl alcohol-based resin (hereinafter referred to as a "PVA-based resin") film containing iodine.

No particular limitation is imposed on the PVA-based resin that forms the PVA-based resin film, and an appropriate PVA-based resin can be selected in accordance with the intended purpose. Examples thereof include polyvinyl alcohol and ethylene-vinyl alcohol copolymers.

The polyvinyl alcohol is obtained through saponification of polyvinyl acetate. The ethylene-vinyl alcohol copolymer is obtained through saponification of an ethylene-vinyl acetate copolymer. A degree of saponification of the PVA-based resin is typically from 85% by mole through 100% by mole, preferably from 95.0% by mole through 99.95% by mole, and further preferably from 99.0% by mole through 99.93% by mole. The degree of saponification is determined in accordance with JIS K 6726-1994. By using the PVA-based resin having such a degree of saponification, it is possible to obtain a polarizer having excellent durability. When the degree of saponification is too high, the resulting product may be formed into a gel.

No particular limitation is imposed on an average degree of polymerization of the PVA-based resin, and the average degree of polymerization thereof can be appropriately selected in accordance with the intended purpose. The average degree of polymerization of the PVA-based resin is, for example, from 1000 through 10000, preferably from 1200 through 5000, and further preferably from 1500 through 4500. Note that, the average degree of polymerization is determined in accordance with JIS K 6726-1994.

Examples of a production method of the polarizer 121 include: method (I) of stretching a PVA-based resin film alone, followed by staining; and method (II) of stretching a stacked body (i) including a resin base material and a polyvinyl alcohol-based resin layer, followed by staining. The method (I) is a well-known customary method in the art, and thus detailed description thereof will be omitted.

The method (II) preferably includes a step of stretching the stacked body (i) including the resin base material and the polyvinyl alcohol-based resin layer formed on one side of the resin base material, followed by staining, thereby producing the polarizer on the resin base material. The stacked body (i) can be formed by coating a coating liquid containing the polyvinyl alcohol-based resin on the resin base material, followed by drying. Alternatively, the stacked body (i) may be formed by transferring the polyvinyl alcohol-based resin layer onto the resin base material. Details of the above production method (II) are described in, for example, Japanese Patent Application Publication No. 2012-73580, and this publication can be incorporated in the present specification as a reference.

### [First and second protective films]

No particular limitation is imposed on the first protective film 122 and the second protective film 123, and appropriate resin films can be selected in accordance with the intended purpose. Examples of materials of the first protective film 122 and the second protective film 123 include: polyester-based resins such as polyethylene terephthalate (PET); cellulose-based resin such as triacetylcellulose (TAC); cycloolefin-based resins such as norbornene-based resins; olefin-based resins such as polyethylene and polypropylene; and (meth)acrylic resins. Of these, polyethylene terephthalate (PET) is preferable. Note that, the "(meth)acrylic resin" refers to an acrylic resin and/or a methacrylic resin.

As the (meth)acrylic resin, for example, a (meth)acrylic resin having a glutarimide structure is used. The (meth)acrylic resin having the glutarimide structure (hereinafter may be referred to as a "glutarimide resin") is described in, for example, Japanese Patent Application Publication Nos. 2006-309033, 2006-317560, 2006-328329, 2006-328334, 2006-337491, 2006-337492, 2006-337493, 2006-337569, 2007-009182, 2009-161744, and 2010-284840. These descriptions can be incorporated in the present specification as references.

The first protective film 122 and the second protective film 123, and the polarizer 121 can be stacked on top of each other via given appropriate adhesive layers. The resin base material used during the production of the polarizer 121 is peeled off before or after stacking of the first protective film 122 and the second protective film 123, and the polarizer 121.

Thicknesses of the first protective film 122 and the second protective film 123 are preferably from 4 um through 250 um, more preferably from 5 um through 150 um, further preferably from 10 um through 100 um, and particularly preferably from 10 um through 50 um.

Elastic moduli of the first protective film 122 and the second protective film 123 are 1 GPa or higher, preferably from 1 GPa through 10 GPa, more preferably from 1.8 GPa through 7 GPa, and further preferably from 2 GPa through 5 GPa. Within such ranges, the multi-layered structure 1A having excellent puncture resistance can be obtained.

### [Tacky agent layer]

The tacky agent layer 18 can be formed of a given appropriate tacky agent. As the tacky agent, for example, a tacky agent containing, as a base polymer, a polymer such as an acrylic polymer, a silicone-based polymer, polyester, polyurethane, polyamide, polyether, or a fluorine-based or rubber-based polymer is used. Preferably, an acrylic tacky agent is used. This is because the acrylic tacky agent has excellent optical transparency and exhibits tacky properties of appropriate wettability, aggregation property, and adhesiveness, and can be excellent in, for example, weather resistance and heat resistance. In particular, an acrylic tacky agent formed of an acrylic polymer having from 4 through 12 carbon atoms is preferable.

A thickness of the tacky agent layer 18 is preferably from 1 um through 100 um, more preferably from 3 um through 80 um, and further preferably from 3 um through 50 um. Within such ranges, when the multi-layered structure 1A is attached to an optical element (e.g., a liquid crystal cell) to form an optical stacked body, the formed optical stacked body has excellent flexibility and puncture resistance.

### [Release film]

The release film 19 can be formed of, for example, a resin such as polyethylene terephthalate (PET), polyethylene (PE), or polypropylene (PP). A thickness of the release film 19 is preferably from 5 um through 125 um, more preferably from 20 um through 75um, and further preferably from 30 um through 50 um. The release film 19 is peeled off at the interface with the tacky agent layer 18 before the multi-layered structure 1A is attached to an optical element (e.g., a liquid crystal cell).

In this way, in the multi-layered structure, the resin layer 10 may be a single layer or includes a plurality of layers. In either case, when the thickness of the outer peripheral portion 101 is 5 um or more, it is possible to prevent the glass layer 30 from receiving an impact of heat generated by laser light upon the processing of the resin layer 10 through irradiation of the laser light. As a result, when the glass layer 30 is cut with the laser light, it is possible to suppress cracks from forming in the glass layer 30. Also, in the case in which the resin layer 10 includes a plurality of layers, a method of cutting with a laser is similar to that in the first embodiment.

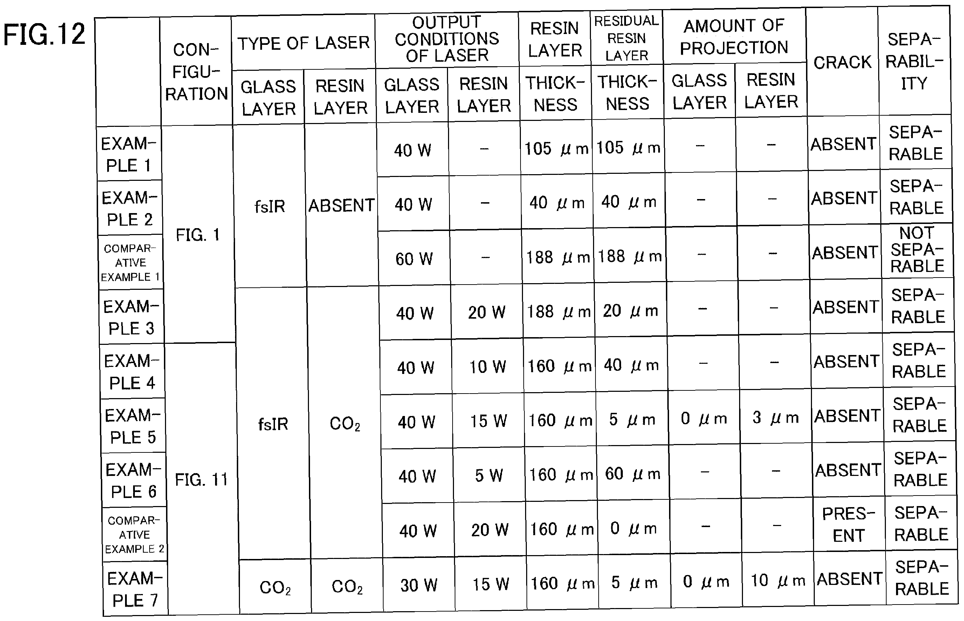

In the following Examples and Comparative Examples, the multi-layered structures having different layer configurations were produced, and studied for the amount of projection of the glass layer or the resin layer, the presence or absence of cracks in the glass layer, and whether the glass layer and the resin layer were separable, while changing the type of the laser, the output conditions of the laser, and the thickness of the residual resin layer. Details of the conditions and the results of the studies are as presented in FIG. 12. In FIG. 12, fsIR denotes a femtosecond laser and CO₂ denotes a carbon dioxide laser. Note that, there are also cases in which the outer peripheral portion and the inner portion in the resin layer have the same thickness. In other words, there are also cases in which the resin layer and the residual resin layer have the same thickness.

### [Example 1]

In Example 1, a multi-layered structure having the structure as illustrated in FIG. 1 was produced in accordance with the production process as illustrated in FIGS. 4, 5, 8, and 9. In the multi-layered structure produced in Example 1, alkali-free glass was used as a material of the glass layer, and the thickness thereof was about 50 um. A UV curable epoxy-based adhesive was used as a material of the adhesive layer, and the thickness thereof was about 1.5 um. A polyethylene terephthalate-based resin was used as a material of the resin layer, and the thickness thereof was about 105 um. The thickness of the residual resin layer is the same as that of the resin layer; i.e., 105 um.

### [Example 2]

In Example 2, a multi-layered structure having the structure as illustrated in FIG. 1 was produced in accordance with the production process as illustrated in FIGS. 4, 5, 8, and 9. In the multi-layered structure produced in Example 2, alkali-free glass was used as a material of the glass layer, and the thickness thereof was about 100 um. A UV curable epoxy-based adhesive was used as a material of the adhesive layer, and the thickness thereof was about 1.5 um. An acrylic resin was used as a material of the resin layer, and the thickness thereof was about 40 um. The thickness of the residual resin layer is the same as that of the resin layer; i.e., 40 um.

### [Comparative Example 1]

In Comparative Example 1, a multi-layered structure having the structure as illustrated in FIG. 1 was produced in accordance with the production process as illustrated in FIGS. 4, 5, 8, and 9. In the multi-layered structure produced in Comparative Example 1, alkali-free glass was used as a material of the glass layer, and the thickness thereof was about 100 um. A UV curable epoxy-based adhesive was used as a material of the adhesive layer, and the thickness thereof was about 1.5 um. An acrylic resin was used as a material of the resin layer, and the thickness thereof was about 188 um. The thickness of the residual resin layer is the same as that of the resin layer; i.e., 188 um.

### [Example 3]

In Example 3, a multi-layered structure having the structure as illustrated in FIG. 1 was produced in accordance with the production process as illustrated in FIG. 4 to FIG. 9. In the multi-layered structure produced in Example 3, alkali-free glass was used as a material of the glass layer, and the thickness thereof was about 100 um. A UV curable epoxy-based adhesive was used as a material of the adhesive layer, and the thickness thereof was about 1.5 um. An acrylic resin was used as a material of the resin layer, and the thickness thereof was about 188 um. The thickness of the residual resin layer was 20 um.

### [Example 4]

In Example 4, a multi-layered structure having the structure as illustrated in FIG. 11 was produced in accordance with the production process as illustrated in FIG. 4 to FIG. 9. In the multi-layered structure produced in Example 4, alkali-free glass was used as a material of the glass layer, and the thickness thereof was about 100 um. A UV curable epoxy-based adhesive was used as a material of the adhesive layer, and the thickness thereof was about 1.5 um. An acrylic resin was used as a material of the first protective film, and the thickness thereof was about 40 um. A polyvinyl alcohol-based resin containing iodine was used as a material of the polarizer, and the thickness thereof was about 5 um. An acrylic resin was used as a material of the second protective film, and the thickness thereof was about 40 um. An acrylic polymer was used as a material of the tacky agent layer, and the thickness thereof was about 40 um. Polyethylene terephthalate (PET) was used as a material of the release film, and the thickness thereof was about 38 um. The total thickness of the resin layer was about 160 um. The thickness of the residual resin layer was about 40 µm.

### [Example 5]

In Example 5, a multi-layered structure having the structure as illustrated in FIG. 11 was produced in accordance with the production process as illustrated in FIG. 4 to FIG. 9. In the multi-layered structure produced in Example 5, alkali-free glass was used as a material of the glass layer, and the thickness thereof was about 100 um. A UV curable epoxy-based adhesive was used as a material of the adhesive layer, and the thickness thereof was about 1.5 um. The layer configuration of the resin layer is the same as that in Example 4, and the total thickness of the resin layer was about 160 um. The thickness of the residual resin layer was 5 um.

### [Example 6]

In Example 6, a multi-layered structure having the structure as illustrated in FIG. 11 was produced in accordance with the production process as illustrated in FIG. 4 to FIG. 9. In the multi-layered structure produced in Example 6, alkali-free glass was used as a material of the glass layer, and the thickness thereof was about 100 um. A UV curable epoxy-based adhesive was used as a material of the adhesive layer, and the thickness thereof was about 1.5 um. The layer configuration of the resin layer is the same as that in Example 4, and the total thickness of the resin layer was about 160 um. The thickness of the residual resin layer was 60 um.

### [Comparative Example 2]

In Comparative Example 2, a multi-layered structure having the structure as illustrated in FIG. 11 was produced in accordance with the production process as illustrated in FIG. 4 to FIG. 9. In the multi-layered structure produced in Comparative Example 2, alkali-free glass was used as a material of the glass layer, and the thickness thereof was about 100 um. A UV curable epoxy-based adhesive was used as a material of the adhesive layer, and the thickness thereof was about 1.5 um. The layer configuration of the resin layer is the same as that in Example 4, and the total thickness of the resin layer was about 160 um. The thickness of the residual resin layer was 0 um.

### [Example 7]

In Example 7, a multi-layered structure having the structure as illustrated in FIG. 11 was produced in accordance with the production process as illustrated in FIG. 4 to FIG. 9. In the multi-layered structure produced in Example 7, alkali-free glass was used as a material of the glass layer, and the thickness thereof was about 100 um. A UV curable epoxy-based adhesive was used as a material of the adhesive layer, and the thickness thereof was about 1.5 um. The layer configuration of the resin layer is the same as that in Example 4, and the total thickness of the resin layer was about 160 um. The thickness of the residual resin layer was 5 um.

### [Studies of the results]

From Example 1, Example 2, and Comparative Example 1 in FIG. 12, separability is poor when the thickness of the residual resin layer is 188 um, whereas separability is good when the thickness of the residual resin layer is 105 um or less. This is also shown in the results of Examples 3 to 7.

Meanwhile, from Comparative Example 2, when the thickness of the residual resin layer is 0 um, separability is good, but the glass layer is cracked. This is likely because the fusion layer was formed as described with reference to FIG. 10. Also, from Examples 5 and 7, when the thickness of the residual resin layer is 5 um, the glass layer is not cracked regardless of whether the laser for cutting the glass layer is fsIR or CO₂.

As such, it can be concluded that in order to prevent the glass layer 30 from being cracked, the thickness of the residual resin layer is set to be 5 um or more regardless of whether the laser for cutting the glass layer is fsIR or CO₂. Also, it can be concluded that in order to seek for good separability as well, the thickness of the residual resin layer is preferably set to be 105 um or less.

In summary, when the thickness of the residual resin layer is 5 um or more and 105 um or less, separability of the glass layer and the resin layer is good and the glass layer is not cracked regardless of whether the laser for cutting the glass layer is fsIR or CO₂.

Also, from Examples 5 and 7, even if the resin layer projects from the side face of the glass layer but when the amount of projection is 10 um or less, there is no impact on formation of cracks in the glass layer or deterioration of separability.

While preferable embodiments and the like have been described above in detail, the above-described embodiments and the like are non-limiting. Various modifications and substitutions can be added to the above-described embodiments and the like without departing from the scope of claims recited.

The present international application claims priority to Japanese Patent Application No. 2020-189245, filed November 13, 2020, and the contents of Japanese Patent Application No. 2020-189245 are incorporated herein by reference in its entirety.

### [Description of Symbols]

- 1, 1A, 1S: multi-layered structure
- 10: resin layer
- 10a, 30a: top face
- 10b, 30b: bottom face
- 10c, 30c: side face
- 10x: groove
- 12: polarizing plate
- 18: tacky agent layer
- 19: release film
- 20: adhesive layer
- 30: glass layer
- 101: outer peripheral portion
- 102: inner portion
- 103: oblique portion
- 105: residual resin layer
- 121: polarizer
- 122: first protective film
- 123: second protective film

## Claims

1. A multi-layered structure, comprising:
a resin layer; and
a glass layer stacked via an adhesive layer on the resin layer,
wherein a thickness of the glass layer is 10 um or more 300 um or less, and
a thickness of an outer peripheral portion of the resin layer is 5 um or more.

2. The multi-layered structure according to claim 1, wherein:
an end portion of the outer peripheral portion projects from a side face of the glass layer; and
an amount of projection of the end portion of the outer peripheral portion from the side face of the glass layer is more than 0 um and 10 um or less.

3. The multi-layered structure according to claim 1 or 2, wherein the resin layer includes a thick portion inward of the outer peripheral portion, the thick portion being thicker than the outer peripheral portion.

4. The multi-layered structure according to claim 3, wherein the resin layer includes an oblique portion between the thick portion and the outer peripheral portion, the oblique portion gradually becoming thicker from the outer peripheral portion toward the thick portion.

5. The multi-layered structure according to claim 4, wherein as viewed from an opposite side of the resin layer from the glass layer, the oblique portion and the outer peripheral portion are provided annularly around the thick portion.

6. The multi-layered structure according to any one of claims 1 to 5, wherein the resin layer includes a plurality of layers.

7. The multi-layered structure according to claim 6, wherein the plurality of layers include a polarizing plate including a polarizer.

8. A method for producing a multi-layered structure, the method comprising:
a step of providing a first multi-layered structure in which a plurality of product areas are defined, the first multi-layered structure including a resin layer and a glass layer that is stacked via an adhesive layer on the resin layer; and
a step of forming a plurality of multi-layered structures through separation of the product areas into individual sections by irradiating the outer peripheral portion of each of the product areas in the first multi-layered structure with laser light from a position facing the glass layer to cut the glass layer and the resin layer,
wherein a thickness of the glass layer is 10 um or more and 300 um or less, and
a thickness of the resin layer is 5 um or more.

9. The method for producing the multi-layered structure according to claim 8, further comprising: between the step of providing the first multi-layered structure and the step of forming the plurality of the multi-layered structures, a step of forming a groove in the resin layer including a residual resin layer at a bottom-face side of the resin layer, by irradiating the outer peripheral portion of each of the product areas in the first multi-layered structure with the laser light from a position facing the resin layer,
wherein in the step of forming the plurality of the multi-layered structures, the plurality of multi-layered structures are formed through separation of the product areas into individual sections by irradiating the outer peripheral portion of each of the product areas in the first multi-layered structure with the laser light from the position facing the glass layer to cut the glass layer and the residual resin layer.

10. The method for producing the multi-layered structure according to claim 9, wherein in the step of forming the groove, a carbon dioxide laser is used.

11. The method for producing the multi-layered structure according to any one of claims 8 to 10, wherein in the step of forming the plurality of the multi-layered structures, a femtosecond laser is used.

12. The method for producing the multi-layered structure according to any one of claims 8 to 11, wherein in the step of forming the plurality of the multi-layered structures,
the outer peripheral portion of the resin layer projects from a side face of the glass layer, and
an amount of projection of the outer peripheral portion from the side face of the glass layer is more than 0 um and 10 um or less.
